(19) **Europäisches Patentamt / European Patent Office / Office européen des brevets**

(11) **EP 4 644 093 A1**

(12) **EUROPEAN PATENT APPLICATION**
published in accordance with Art. 153(4) EPC

(43) Date of publication:
05.11.2025 Bulletin 2025/45

(21) Application number: 23910116.5

(22) Date of filing: 12.12.2023

(51) International Patent Classification (IPC):
*B29C 64/386* (2017.01)   *B33Y 50/02* (2015.01)
*B41J 3/407* (2006.01)   *G06T 17/00* (2006.01)
*G06T 7/00* (2017.01)

(52) Cooperative Patent Classification (CPC):
Y02P 10/25

(86) International application number:
PCT/CN2023/138261

(87) International publication number:
WO 2024/140186 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.12.2022 CN 202211726062

(71) Applicant: Shanghai Meinaier Technology Co., Ltd.
Shanghai 201800 (CN)

(72) Inventors:
• XIANG, Yong
Shanghai 200082 (CN)
• QIU, Tengxi
Shanghai 200082 (CN)

(74) Representative: Herrero & Asociados, S.L.
Cedaceros, 1
28014 Madrid (ES)

(54) **THREE-DIMENSIONAL HIGH-PRECISION POSITIONED PRINTING METHOD AND DEVICE**

(57) The invention discloses a three-dimensional high-precision fixed-point printing method and device, wherein a printer prints a designated calibration pattern to a printing platform; Take pictures with 3D camera to obtain two-dimensional pictures and 3D point clouds; Calibrating the camera and the printer, and obtaining the transformation matrix of the printer coordinate system and the camera coordinate system; According to the external parameters, the point cloud in the camera coordinate system can be converted to the printer coordinate system according to the external parameters, and the printing mechanism in the printing device can print through the coordinate parameters provided by the computer vision mechanism, and can convert the 3D coordinates to the printer coordinate system according to the printing requirements of the user, so as to accurately print to the target position, and can flexibly print the pattern on the object to be printed according to the actual position of the object to be printed without manual measurement and adjustment, greatly improving the speed and accuracy, and when the printer has a positioning fault, the machine can be discovered by automatic detection, so as to prevent losses caused by the machine operating in a faulty state.

FIG. 2

EP 4 644 093 A1

Processed by Luminess, 75001 PARIS (FR)

## Description

TECHNICAL FIELD

The present application relates to the field of three-dimensional printing technologies, particularly to a three-dimensional high-precision fixed-point printing method and device.

BACKGROUND

Traditional printers can achieve high positioning accuracy in their own printing coordinate system, but cannot print accurately in the world coordinate system. The reason for this lies in the positioning principle of printing.

Two coordinate systems that determine the real printing position include the operating range coordinate system of the printer and the coordinate system of a printing target.

The operating range coordinate system of the printer includes the mechanical starting position of the printer $(x0, y0, z0)$ to $(xMax, yMax, zMax)$. Under the same operating condition, the printer can achieve high-precision repeated positioning in its own coordinate system. However, the positioning errors of the X-axis, Y-axis and Z-axis will occur after operating for a long time, which may be caused by mechanical wear, aging and fouling of positioning devices, etc. For example, positioning errors are likely to occur to gratings often used for X-axis positioning in the industry due to defacement, flying ink, dust and other reasons. In this case, the operating range coordinate system of the printer is changed, resulting printing positioning errors and failing to operate normally.

The coordinate system of the printing target refers to the coordinate system of the item itself to be printed. Take an A4 sheet of paper as an example, starting from the upper left corner $(x0, y0)$ (the z-axis is fixed, which is not discussed herein) to the lower right corner $(xMax, yMax)$. The coordinate system of the printing target and the operating range coordinate system of the printer are obviously not the same coordinate system. In the traditional printing system, the coordinate system of the printing target does not exist or is completely consistent with the operating range coordinate system of the printer by default. The positioning and typesetting of the traditional printing data are completely determined according to the operating range coordinate system of the printer. Therefore, in actual operation, we always use some auxiliary positioning marks to place paper to ensure the relative correctness of the printing position. The accuracy of this kind of printing position is very low, which depends on the coincidence of the two coordinate systems when placing the printing target (paper). The higher the coincidence, the more accurate the position.

Through the above, it can be seen that the problems in the positioning of traditional printing systems are as follows.

It is difficult for a printer to print the same pattern on the same position of different printing targets.

When there is a hardware problem with the printer that leads to a positioning failure, it will directly lead to a printing error.

The above problems are acceptable to a certain extent in traditional printing scenarios, but they become fatal problems in nail decorating scenarios. At any time, the user cannot accept that the nail decorating effect is printed to places other than nails. This requires extremely high positioning accuracy of the printing system in the world coordinate system.

SUMMARY

In order to solve the above technical problems, the invention provides a three-dimensional high-precision fixed-point printing method. Firstly, a set of computer vision system is installed above the printing system, and at the same time, a set of special mark points is arranged on the top of the printing carriage for assisting the 3D camera to position the printing carriage. In order to unify the whole system coordinate system, a 3D camera coordinate system is introduced. The relationship between the three coordinate systems is that the 3D camera coordinate system includes the operating range coordinate system of the printer; The operating range coordinate system of the printer includes a printing target coordinate system, and the method is executed by the printer, where the method includes the following steps:

S1, printing, by a printer, a designated calibration pattern to a printing platform;

S2. obtaining, by photographing with a 3D camera, a two-dimensional picture and a 3D point cloud;

S3, calibrating a camera and the printer, to obtain a transformation matrix of a printer coordinate system and a camera coordinate system;

S4. converting a point cloud in the camera coordinate system to the printer coordinate system according to external parameters.

Preferably, the method of calibrating the printer includes specific processes as follows:

1) placing calibration paper for the printer manually;

2) moving to and stopping at a mechanical starting position by the printer;

3) photographing by the 3D camera, and identifying a position T1 of a carriage in a 3D coordinate system through mark points on a top of a printing carriage, where the T1 is a printing starting position;

4) starting to print a specific pattern by the printer;

5) photographing by the 3D camera to identify a printed pattern and identify a complete pattern through pattern data, and calculating a coordinate conversion matrix A in combination with the external parameters of the camera;

6) completing the calibration.

Preferably, the self-check method of calibrating the printer includes specific processes as follows:

1) moving to and stopping at a printing starting position by a printing carriage;

2) photographing by the 3D camera, and identifying a position $nT1$ of a carriage in a 3D coordinate system through mark points on a top of a printing carriage;

3) comparing the $nT1$ with a $T1$ recorded in a factory calibration, and performing maintenance actions when a difference between the two exceeds a certain threshold;

4) performing the self-check of calibrating again after the maintenance actions are completed, and setting a machine to a fault state so as to be disposed by a maintenance personnel when it fails again.

Preferably, the printer has 3 freedom degrees to move in an X-axis, a Y-axis and a Z-axis, and a plane of the printing platform is parallel to a plane of nozzles of an ink-jet printer.

Preferably, the calibration pattern in the step S1 includes a checkerboard or a lattice diagram.

Preferably, in the step S2, the printing is performed by the printer when a z-axis coordinate is 0, and a starting position coordinate (x=0, y=0, z=0) of the printer is regarded as an origin of the printer coordinate system.

A three-dimensional high-precision fixed-point printing device, where a printing mechanism in the printing device performs printing through coordinate parameters provided by a computer vision mechanism, and includes a rack, installed with the computer vision mechanism, a hand slot mechanism and a printing mechanism, where the computer vision mechanism is arranged directly above the hand slot mechanism.

Preferably, the computer vision mechanism includes a camera, a structured light component, a vision control module, a light filling component and a moving module.

Preferably, the printing mechanism is connected with an X-axis moving module, a Y-axis moving module, and a Z-axis moving module, and the printing mechanism moves in an X-axis direction, a Y-axis direction, and a Z-axis direction.

Preferably, the X-axis moving module includes a driving motor, where the driving motor is connected to a driving wheel, the driving wheel is connected to a driven wheel through a transmission belt, and the driven wheel is installed at another end of the rack.

Preferably, an ink absorbing assembly is installed on the rack below the printing mechanism, and the ink absorbing assembly includes an ink absorbing sponge and a sponge holder, where the sponge holder is fixed to the rack.

Preferably, an ink receiving box is installed on one side of the ink absorbing assembly, an opening is provided at an upper part of the ink receiving box, and a through hole is provided at a bottom part of the ink receiving box.

Technical effects and advantages of the present invention are as follows.

According to the printing requirements of the user, the 3D coordinates are converted to the printer coordinate system, so as to accurately print to the target position, and the pattern can be flexibly printed on the object to be printed according to the actual position of the object to be printed, without manual measurement and adjustment, which greatly improves the speed and accuracy. Through self-check of calibration, damage to the user due to positioning errors caused by various reasons during nail decorating can be effectively avoided. When there is a positioning failure occurred to the printer, it can be found by the machine through automatic check, thereby preventing the machine from operating in a faulty state and causing losses.

BRIEF DESCRIPTION OF THE DRAWINGS

FIG. 1 is a schematic diagram of a structure of the calibration in the three-dimensional high-precision fixed-point printing method according to embodiments of the present invention;

FIG. 2 is a schematic structural diagram of a three-dimensional high-precision fixed-point printing device according to embodiments of the present invention.

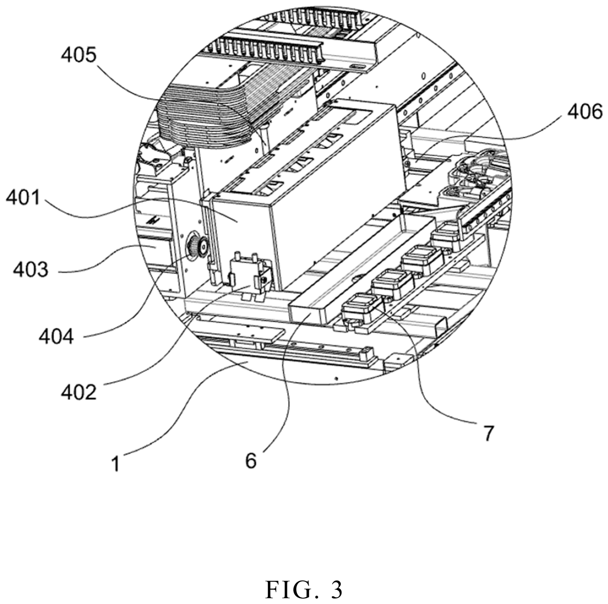

FIG. 3 is an enlarged structural diagram of portion A in FIG. 2 of the three-dimensional high-precision fixed-point printing device according to embodiments of the present invention.

In the FIGs: 1, rack; 2, computer vision mechanism; 3, hand slot mechanism; 4, printing mechanism; 401, printing nozzle module; 402, soft sensor; 403, driving motor; 404, driving wheel; 405, Y-axis moving module; 406, Z-axis moving module; 5, driven wheel; 6, ink receiving box; 7, ink absorbing assembly.

DETAILED DESCRIPTION

Attached drawings and specific embodiments are combined as follows to further describe the present disclosure. The embodiments of the present invention are presented for the sake of example and description, and are not intended to be exhaustive or to limit the invention to the disclosed modes. Many modifications and variations will be apparent to those of ordinary skill in the art. The embodiments have been selected and described in order to better illustrate the principles and practical applications of the invention and to enable those of ordinary skill in the art to understand the invention so as to design various embodiments with various modifications suitable for particular applications.

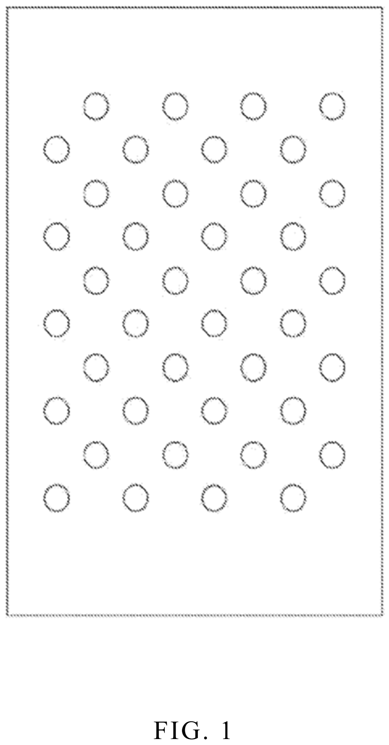

Referring to FIG. 1, in this embodiment, a three-dimensional high-precision fixed-point printing method is provided, which is executed by a printer.

The printer has 3 freedom degrees to move in an X-axis, a Y-axis and a Z-axis, and a plane of the printing platform is parallel to a plane of nozzles of an ink-jet printer

The method includes the following steps.

S1, printing, by a printer, a designated calibration pattern to a printing platform;

where the calibration pattern includes a checkerboard or a lattice diagram.

The printer prints when the z-axis coordinate is 0, and a starting position coordinate (x=0, y=0, z=0) of the printer is regarded as an origin of the printer coordinate system;

The calibration pattern is as shown in Figure 1, which has a size of A6, and a total of 44 circles, and the relative coordinates of the centers of the circles are known. The coordinates of the points in the printer coordinate system are set as (xp1, yp1, zp1) to (xp44, yp44, zp44).

The coordinate of each center of a circle after printed is known in the printer coordinate system.

S2, obtaining, by photographing with a 3D camera, a two-dimensional picture (grayscale or color) and a 3D point cloud;

S3, calibrating a camera and the printer, to obtain a transformation matrix of a printer coordinate system and a camera coordinate system (rotation and translation relationship of external parameters);

where findCirclesGrid or SimpleBlobDetector detection of the opencv vision library may be used when finding the center of each circle on the 2d image. At the same time, there may be a point cloud of a pixel point on the corresponding pixel point. The coordinates in the camera coordinate system are (xc1, yc2, zc2) to (xc1, yc2, zc2); Since the point cloud of this point does not necessarily exist. Therefore, a threshold T = 40 is set, and the number of centers of circles are detected as 0 to 44. For the accuracy of calibration, when the number of detected point cloud coordinates > T, the next calculation is carried out to obtain external parameters by solving pnp;

S4. converting a point cloud in the camera coordinate system to the printer coordinate system according to the external parameters.

The projection equation of the three-dimensional high-precision fixed-point printing method can be expressed as follows:

$$z \begin{bmatrix} u \\ v \\ 1 \end{bmatrix} = K \begin{bmatrix} R & t \end{bmatrix} \begin{bmatrix} x \\ y \\ z \\ 1 \end{bmatrix}$$

Where K is the camera internal parameter matrix, which is known.

According to the external parameters, the point cloud in the camera coordinate system can be converted to the printer coordinate system.

After the 3D point cloud is converted to the printer coordinate system, each point cloud can be converted to the print plane.

The actual printed size of a picture is determined by the pixels and resolution of the picture. The pixel refers to the small color points that form the picture, and resolution (unit DPI) refers to the number of pixels per inch, which may be regarded as the distribution density of these small color points; When the pixels are the same, the higher the resolution, the greater the pixel density; the smaller the actual print size, and the more delicate the image.

Actual size (inches) = pixels/resolution; 1 inch = 2.54 cm; for example, a picture is 600 pixels wide and has a resolution of 300, then the actual print width is: 600/300 = 2 inches, about 5 centimeters.

According to the above formula, the point cloud in the printer coordinate system can be converted to the pixel coordinate system of the picture (horizontally u and vertically v) without considering the z axis. Assuming that the coordinate of a point cloud is (25.4 mm, 250.4 mm, Z), then u = (25.4/25.4) * 300 = 300, v = (250.4/25.4) = 3000. Therefore the pixel coordinate of the point cloud is (300, 3000) in the picture coordinate system.

The factory calibration is to determine the conversion relationship between the 3D camera coordinate system and the printing coordinate system. The specific steps of the printer calibration method are as follows:

1) placing calibration paper for the printer manually;

2) moving to and stopping at a mechanical starting position by the printer;

3) photographing by the 3D camera, and identifying a position T1 of a carriage in a 3D coordinate system through mark points on a top of a printing carriage, where the T1 is a printing starting position;

4) starting to print a specific pattern by the printer;

5) photographing by the 3D camera to identify a printed pattern and identify a complete pattern through pattern data, and calculating a coordinate conversion matrix A in combination with the external parameters of the camera;

6) completing the calibration. where the conversion matrix A between the operating range coordinate system of the printer and the 3D camera coordinate system is obtained through factory calibration.

During the nail decorating process,

1. the 3D camera takes pictures, and the coordinate B of the nail in the 3D camera coordinate system is obtained through a series of algorithms;

2. then convert the coordinate B into the coordinate C in the operating range coordinate system of the printer through the conversion matrix A; and

3. send the coordinate C to the printer to execute the print job.

Calibration self-inspection

In order to ensure the accurate positioning of each nail decorating operation, the system can carry out calibration self-inspection according to the requirements, so as to find the positioning faults caused by various reasons.

1) Moving to and stopping at a printing starting position by a printing carriage;

2) Photographing by the 3D camera, and identifying a position nT1 of a carriage in a 3D coordinate system through mark points on a top of a printing carriage;

3) Comparing the nT1 with a T1 recorded in a factory calibration, and performing maintenance actions when a difference between the two exceeds a certain threshold;

4) Performing the self-check of calibrating again after the maintenance actions are completed, and setting a machine to a fault state so as to be disposed by a maintenance personnel when it fails again.

Through calibration self-inspection, it can effectively prevent positioning errors caused by various reasons during nail decorating from causing damage to the user.

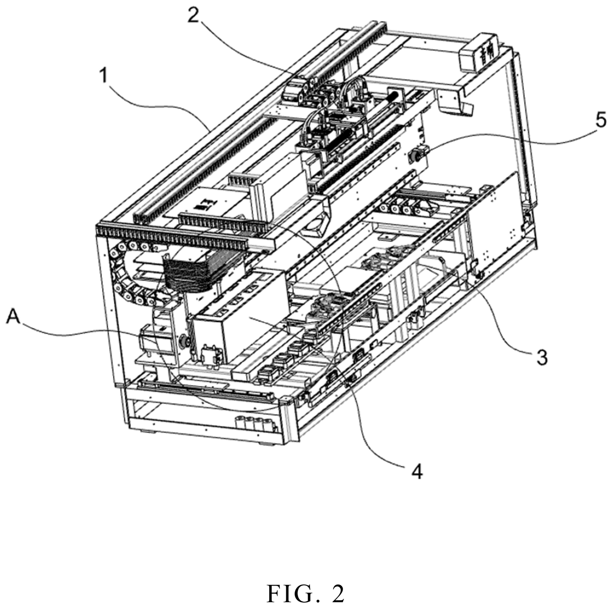

As shown in FIG. 2, this embodiment provides a three-dimensional high-precision fixed-point printing device, in which the printing mechanism performs printing through coordinate parameters provided by the computer vision mechanism 2, and the printing mechanism includes a rack 1, the rack 1 is installed with a computer vision mechanism 2, the computer vision mechanism 2 is arranged directly above the hand slot mechanism 3, and the computer vision mechanism 2 is composed of a camera, a structured light component, a vision control module, a light filling component and a moving module, where there are two cameras arranged on the left and right sides to take photos, while the structured light and light filling components assist the cameras in improving the accuracy of image capture. The computer vision mechanism 2 processes the captured photos through algorithms to calculate the point cloud information of the palm in a three-dimensional space. Based on the point cloud data, the height and the inclined angle of each finger are further calculated to enable the hand slot mechanism 3 to perform adjustments.

On the rack 1, a printing mechanism 4 is installed on the side of the computer vision mechanism 2, the printing mechanism 4 is connected to the X-axis moving module, Y-axis moving module, and Z-axis moving module, allowing movement in the X-axis, Y-axis, and Z-axis directions. The printing mechanism 4 includes a print nozzle module 401, which includes print nozzles and a housing. The print nozzles are connected to a material bin via an ink pathway, and the material bin is used for storing ink. A soft sensor 402 is installed on the side wall of the housing. The X-axis moving module includes a driving motor 403, which is connected to a driving wheel 404. The driving wheel 404 is connected to a driven wheel 5 via a transmission belt. The driven wheel 5 is installed at the other end of rack 1. When the driving motor 403 is activated, it drives the driving wheel 404 to rotate, and drives the driven wheel 5 to rotate via the transmission belt, enabling the print nozzle module 401 to move along the X-axis direction. The rear end of the print nozzle module 401 is connected to the Y-axis moving module, which is an elevating module. The Y-axis moving module enables the print nozzle module 401 to move up and down, to adjust the height of the print nozzle module 401. The structure formed by the combination of the X-axis moving module, Y-axis moving module, and print nozzle module 401 is connected to the Z-axis moving module 406. The Z-axis moving module 406 is a screw module, which, driven by a servo motor, drives the X-axis moving module, Y-axis moving module, and print nozzle module 401 to move forward and backward.

Furthermore, an ink absorbing assembly 7 is installed on the rack 1 below the printing mechanism 4. The ink absorbing assembly 7 includes an ink absorbing sponge and a sponge holder. The sponge holder is fixed to the rack 1, and the ink absorbing sponge remains moist. When the printing nozzle module 401 is not in use, the bottoms of the nozzles adhere to the ink absorbing sponge, keeping the nozzles in a moist state to prevent drying due to exposure to the environment. An ink receiving box 6 is installed on one side of the ink absorbing assembly 7, which has an opening at the top and a through hole at the bottom. Before the printing nozzle module 401 starts operation, it moves above the ink receiving box 6 under the drive of the Z-axis moving module 406. The Y-axis moving module 405 drives the printing nozzle module 401 to move downward, allowing the nozzles to enter the inside of the ink receiving box 6. The printing nozzle module 401 is activated to eject ink from the nozzles. Subsequently, the Y-axis moving module 405 is activated to lift the printing nozzle module 401. The driving motor 403 is activated to drive the driving wheel 404 and the driven wheel 5 to rotate, so that the printing nozzle module 401 moves above the hand slot mechanism 3 to perform printing to nails placed in the hand slot mechanism 3. After completing the printing operation, the X-axis moving module, Y-axis moving module 405, and Z-axis moving module 406 drive the printing nozzle module 401 back to its origin.

In the invention, the 3D coordinate can be converted to the printer coordinate system according to the printing requirement of the user, so as to accurately print to the target position, and the pattern can be flexibly printed on the object to be printed according to the actual position of the object to be printed without manual measurement and adjustment, thereby greatly improving speed and accuracy.

The embodiments are described for illustrative purposes only and are not intended to limit the present disclosure. Based on one or more embodiments in the present disclosure, all other embodiments obtained by those skilled in the art without creative operate fall within the scope of the present disclosure. Structures, devices, and methods of operation that are not specifically described and explained in the present invention are carried out according to conventional means in the art unless otherwise specified and limited.

**Claims**

1. A three-dimensional high-precision fixed-point printing method, comprising the following steps:

    S1, printing, by a printer, a designated calibration pattern to a printing platform;
    S2, obtaining, by photographing with a 3D camera, a two-dimensional picture and a 3D point cloud;
    S3, calibrating a camera and the printer, to obtain a transformation matrix of a printer coordinate system and a camera coordinate system;
    S4. converting a point cloud in the camera coordinate system to the printer coordinate system according to external parameters.

2. The three-dimensional high-precision fixed-point printing method according to claim 1, wherein a method of calibrating the printer comprises specific processes as follows:

    1) placing calibration paper for the printer manually;
    2) moving to and stopping at a mechanical starting position by the printer;
    3) photographing by the 3D camera, and identifying a position T1 of a carriage in a 3D coordinate system through mark points on a top of a printing carriage, wherein the T1 is a printing starting position;
    4) starting to print a specific pattern by the printer;
    5) photographing by the 3D camera to identify a printed pattern and identify a complete pattern through pattern data, and calculating a coordinate conversion matrix A in combination with the external parameters of the camera;
    6) completing the calibration.

3. The three-dimensional high-precision fixed-point printing method according to claim 1, wherein a self-check method of calibrating the printer comprises specific processes as follows:

    1) moving to and stopping at a printing starting position by a printing carriage;
    2) photographing by the 3D camera, and identifying a position nT1 of a carriage in a 3D coordinate system through mark points on a top of a printing carriage;
    3) comparing the nT1 with a T1 recorded in a factory calibration, and performing maintenance actions when a difference between the two exceeds a certain threshold;
    4) performing the self-check of calibrating again after the maintenance actions are completed, and setting a machine to a fault state so as to be disposed by a maintenance personnel when it fails again.

4. The three-dimensional high-precision fixed-point printing method according to claim 1, wherein the printer has 3 freedom degrees to move in an X-axis, a Y-axis and a Z-axis, and a plane of the printing platform is parallel to a plane of nozzles of an ink-jet printer.

5. The three-dimensional high-precision fixed-point printing method according to claim 1, wherein the calibration pattern in the step S1 comprises a checkerboard or a lattice diagram.

6. The three-dimensional high-precision fixed-point printing method according to claim 1, wherein, in the step S2, the printing is performed by the printer when a z-axis coordinate is 0, and a starting position coordinate (x=0, y=0, z=0) of the printer is regarded as an origin of the printer coordinate system.

7. A device adopting the three-dimensional high-precision fixed-point printing method according to any one of claim 1 to claim 6, **characterized in that** a printing mechanism in a printing device performs printing through coordinate parameters provided by a computer vision mechanism (2), and comprises a rack (1), installed with a computer vision mechanism (2), a hand slot mechanism (3) and a printing mechanism (4), wherein the computer vision mechanism (2) is arranged directly above the hand slot mechanism (3).

8. The three-dimensional high-precision fixed-point printing device according to claim 7, wherein the computer vision mechanism (2) comprises a camera, a structured light component, a vision control module, a light filling component and a moving module.

9. The three-dimensional high-precision fixed-point printing device according to claim 8, wherein the printing mechanism (4) is connected with an X-axis moving module, a Y-axis moving module, and a Z-axis moving module, and the printing mechanism (4) moves in an X-axis direction, a Y-axis direction, and a Z-axis direction.

10. The three-dimensional high-precision fixed-point printing device according to claim 9, wherein the X-axis moving module comprises a driving motor (403), wherein the driving motor (403) is connected to a driving wheel (404), the driving wheel (404) is connected to a driven wheel (5) through a transmission belt, and the driven wheel (5) is installed at another end of the rack (1).

11. The three-dimensional high-precision fixed-point printing device according to claim 10, wherein an ink absorbing assembly (7) is installed on the rack (1) below the printing mechanism (4), and the ink absorbing assembly (7) comprises an ink absorbing sponge and a sponge holder, wherein the sponge holder is fixed to the rack (1).

12. The three-dimensional high-precision fixed-point printing device according to claim 11, wherein an ink receiving box (6) is installed on one side of the ink absorbing assembly (7), an opening is provided at an upper part of the ink receiving box (6), and a through hole is provided at a bottom part of the ink receiving box (6).

FIG. 1

FIG. 2

FIG. 3

## INTERNATIONAL SEARCH REPORT

| International application No. |
| --- |
| **PCT/CN2023/138261** |

| **A.** | **CLASSIFICATION OF SUBJECT MATTER** |
| --- | --- |

B29C64/386(2017.01)i;  B33Y50/02(2015.01)i;  B41J3/407(2006.01)i;  G06T17/00(2006.01)i;  G06T7/00(2017.01)i

According to International Patent Classification (IPC) or to both national classification and IPC

| **B.** | **FIELDS SEARCHED** |
| --- | --- |

Minimum documentation searched (classification system followed by classification symbols)

IPC:B29C,B33Y,B41J,G06T

Documentation searched other than minimum documentation to the extent that such documents are included in the fields searched

Electronic data base consulted during the international search (name of data base and, where practicable, search terms used)

CNTXT, ENTXTC, CNKI: 打印, 摄像, 相机, 变换, 函数, 矩阵, 标定, 标记, 采集, 差值, 点云, 定点, 定位, 二维, 美甲, 内参, 外参, 平面, 三维, 视觉, 坐标系, 旋转平移, 映射, 阈值; VEN, WPABS, ENTXT: camera, conversion, function, match, matrix, transformation, print, calibrate, 3d, three-dimensional, 2d, coordinate system, parameter.

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 116080290 A (SHANGHAI NAILADORA TECHNOLOGY CO., LTD.) 09 May 2023 (2023-05-09)<br>description, paragraphs 1-84, and figures 1-3 | 1-12 |
| X | CN 111590899 A (JIANG QING et al.) 28 August 2020 (2020-08-28)<br>description, paragraphs 63-104 | 1, 6 |
| Y | CN 111590899 A (JIANG QING et al.) 28 August 2020 (2020-08-28)<br>description, paragraphs 63-104 | 2-5, 7-12 |
| Y | CN 113306308 A (GAO WEI) 27 August 2021 (2021-08-27)<br>description, paragraphs 266-275 | 2, 7-12 |
| Y | CN 113838144 A (HANGZHOU YINGE TECHNOLOGY CO., LTD.) 24 December 2021 (2021-12-24)<br>description, paragraphs 17-25 | 3, 5, 7-12 |
| Y | CN 109532249 A (XU YUE) 29 March 2019 (2019-03-29)<br>description, paragraphs 39-95, and figures 1-3 | 4, 7-12 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **05 March 2024** | **07 March 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/138261** |

**C.    DOCUMENTS CONSIDERED TO BE RELEVANT**

| Category* | Citation of document, with indication, where appropriate, of the relevant passages | Relevant to claim No. |
|---|---|---|
| A | CN 109304866 A (WEI SHUAI) 05 February 2019 (2019-02-05)<br>entire document | 1-12 |
| A | CN 113112545 A (XIDIAN UNIVERSITY) 13 July 2021 (2021-07-13)<br>entire document | 1-12 |
| A | KR 101850222 B1 (CHANGWON NATIONAL UNIVERSITY INDUSTRY ACADEMY COOPERATION CORPS) 31 May 2018 (2018-05-31)<br>entire document | 1-12 |

Form PCT/ISA/210 (second sheet) (July 2022)

INTERNATIONAL SEARCH REPORT
Information on patent family members

International application No.

**PCT/CN2023/138261**

| Patent document cited in search report | | | Publication date (day/month/year) | Patent family member(s) | | | Publication date (day/month/year) |
|---|---|---|---|---|---|---|---|
| CN | 116080290 | A | 09 May 2023 | None | | | |
| CN | 111590899 | A | 28 August 2020 | CN | 111590899 | B | 14 September 2021 |
| CN | 113306308 | A | 27 August 2021 | CN | 113306308 | B | 23 June 2023 |
| CN | 113838144 | A | 24 December 2021 | CN | 113838144 | B | 19 May 2023 |
| CN | 109532249 | A | 29 March 2019 | CN | 209580864 | U | 05 November 2019 |
| CN | 109304866 | A | 05 February 2019 | None | | | |
| CN | 113112545 | A | 13 July 2021 | CN | 113112545 | B | 21 March 2023 |
| KR | 101850222 | B1 | 31 May 2018 | None | | | |

Form PCT/ISA/210 (patent family annex) (July 2022)